# EUROPEAN PATENT SPECIFICATION

(11) **EP 2 344 402 B1**
(45) Date of publication and mention of the grant of the patent: **09.09.2015**
(21) Application number: 09760980.4
(22) Date of filing: 04.11.2009
(51) Int. Cl.: B65D 75/58, B65D 83/08

(54) **A PACK OF LUBRICANT WIPES**
PACKUNG MIT TÜCHERN MIT SCHMIERMITTEL-IMPRÄGNIERUNG
DISPOSITIF DE DISTRIBUTION DE SERVIETTES COMPRENANT DES COMPOSITIONS LUBRIFIANTES

(30) Priority: 11.11.2008 GB 0820630
(43) Date of publication of application: 20.07.2011
(73) Proprietor: O'Brien, James Aiden, Co. Cork (IE)
(72) Inventor: O'Brien, James Aiden, Co. Cork (IE)
(74) Representative: Jones, Graham Henry
(86) International application number: PCT/IB2009/007341
(87) International publication number: WO 2010/055382

(56) References cited:
- IE-A2- 20 090 187
- US-A- 5 664 677
- US-A1- 2005 029 280
- US-A1- 2008 015 122

## Description

This invention relates to a pack of wipes.

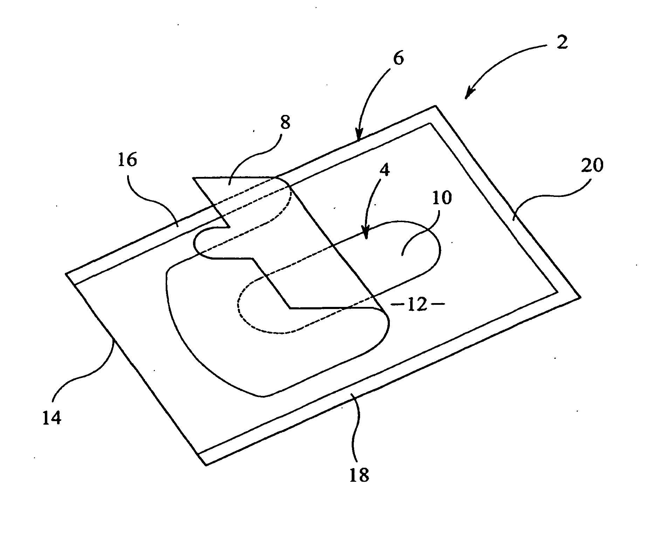

In industry, it is often necessary to draw a cable through a conduit in a building. The cable may be required for wide variety of purposes including carrying electrical power, data or general telecommunications information. The cable is often of a considerable length and friction between the cable and the conduit often makes it difficult to draw the cable through the conduit. Persons installing such cables will normally lubricate the cable in order to facilitate the drawing of the cable through the conduit. An installer will usually carry a bottle of a liquid or gel lubricant. It is often not convenient for the person to carry the bottle of lubricant. Also it is often messy for one person to apply the lubricant from the bottle to the cable since the bottle is usually not such as to facilitate handling of the lubricant and/or dispensation of the lubricant whilst also handling the cable feed.

It is an aim of present invention to reduce the above mentioned problem.

Accordingly, the present invention provides a pack of wipes comprising a container for the wipes, and a plurality of the wipes in the container, and characterised by the combination that the container is a flat bag, the wipes are impregnated with a lubricant, and the wipes are for wiping the lubricant on a cable which is to be passed through a conduit.

The pack of wipes of the present invention is advantageous in that the container may be constructed to allow easy removal of the wipes from the container. Once removed, the wipes can easily be wiped over the cable to provide the cable with the required lubrication to enable the cable to be drawn into the conduit. Thus the application of the lubricant is easier and less messy than the above mentioned method of applying the lubricant from a bottle of the lubricant. In addition, the wipes enable less of the lubricant to be utilised per application since the wipes are already impregnated with the lubricant, and lubricant does not have to be dispensed from the bottle such that too much lubricant may often be dispensed.

The pack of wipes of the present invention is thus advantageous in that it is able to overcome the above mentioned existing problem of lubricating cables. The pack of wipes of the present invention is further such that it is surprising insofar as packs of wipes have been known for many years, with the known wipes being impregnated with a solvent or detergent (US 5 664 677A). These known packs of wipes may employ an aggressive solvent for industrial use where grease, oils and tars need to be removed, or may employ a mild solvent or detergent for use in cosmetic applications by persons wishing to remove make-up or general facial and hand grime, or may employ a detergent for use in hand or surface cleaning.

The present invention is thus in a first area where the above mentioned problem of lubricating cables has been known and has existed for many years (US 2008/015 122 A1). The present invention is also in a second area where packs of wipes have been known for many years but only wipes impregnated with a solvent or detergent and never wipes impregnated with a lubricant for lubricating cables. US 2005/029280 A1 takes wipes impregnated with a lubricant for guns and other metal surfaces into consideration. In spite of these two areas having existed for a very long time, no one has previously thought of modifying an existing pack of wipes to replace the solvent or detergent with a lubricant, and thereby to be able to solve the long standing problem of easily and conveniently lubricating cables needing to be drawn through ducts.

The pack of wipes of the present invention may be one in which the lubricant is a liquid lubricant or a gel lubricant. The lubricant may be an oil or an oil-based formulation.

The lubricant may be a formulation comprising base oil, usually in a proportion of at least 80% by volume, and one or more enhancing additives, usually up to 20% by volume, to improve one or more of lubrication properties, lubricant adhesions, wear resistance, temperature resistance, shear resistance, friction reduction, viscosity, and shelf life. The base oil may be a mineral oil, a liquid paraffin, a polyglycol, a vegetable oil, a polyalfaolefin, a polybutene, cetylalcohol, glycerine, or blends of these products. Variations may be used to take account of chemical compatibility, operating temperatures, biodegradability, stability, and ecology considerations. The enhancing additives may be one or more of silicone oils, vegetable oil esters, polyfluorocarbons, oleo-chemical derivatives, polyalfaolefins, polybutenes, polyglycols, preservatives, thickeners, and viscosity modifiers, depending on the performance properties desired.

Usually, the container will be a resealable container. The resealable container may comprise a peel-back adhesive cover which covers an opening in the container and through which the wipes are obtainable, and the peel-back adhesive cover being resealable on the container to reseal the container after the removal of a desired number of wipes through the opening. The wipes may be obtained through the opening and used one at a time or more than one at a time as may be desired.

The container may be made of a plastics material and/or a laminate foil material. The laminate foil material may be an aluminium foil.

The present invention also provides a method of lubricating a cable which is to be passed through a conduit, which method comprises providing a pack of wipes of the invention, removing at least one of the wipes from the pack of wipes, and wiping the wipe on the cable in order to lubricate the cable with the lubricant that is on the wipe.

In the method of the present invention, the cable may be a power cable, a data cable, or a telecommunications cable. The cable may be a metal cable or a fibre optic cable.

In the method of the invention, the cable will usually be lubricated in a building, or in a service conduit transporting one or more cables to a building or buildings. The cable may be lubricated elsewhere if desired.

The method of the invention may comprise holding the wipe, and passing the cable through the wipe while pulling or pushing the cable into the conduit so that the cable is lubricated as the cable enters the conduit.

An embodiment of the invention will now be described solely by way of example and with reference to the accompanying drawing which shows a pack of wipes of the present invention.

Referring to the drawing, there is shown a pack 2 of wipes 4. The pack 2 comprises a container 6 for the wipes 4, and a plurality of the wipes 4 in the container 6. The wipes 4 are such that they are impregnated with a lubricant. The lubricant is a liquid or gel lubricant.

The container 6 is a flat container in the form of a flat bag as shown. The container 6 is resealable by virtue of having a peel-back adhesive cover 8 which covers an opening 10 in the container 6. The wipes 4 are obtainable through the opening 10. The cover 8 is resealable on an upper surface 12 of the container 6 in order to reseal the container 6 after the removal of a desired number of wipes 4 through the opening 10.

The container 6 is made of a plastics material, or laminate foil, or a combination of both. The container 6 may be formed by folding a length of material at a fold line 14, and then sealing the length of material along edges 16, 18, 20. The sealed edges 16, 18, 20 may be formed using heat sealing, ultrasonic welding, or appropriate adhesives.

When the pack 2 is to be used for lubricating the cable, it is simply necessary to remove at least one of the wipes 4 from the pack 2 through the opening 10, and then to wipe the wipe 4 on the cable in order to lubricate the cable with the lubricant that is on the wipe 4.

The pack 2 is convenient to carry. The wipes 4 are provided with predetermined quantities of lubricant. The wipes 4 are easy to remove from the container 6. The lubricant is easily applied to the cable. Wastage of the lubricant as would occur if the lubricant were being removed from a bottle is avoided. Mess created by lubricant being obtained from the bottle and missing the container is also avoided. An important benefit of the invention is the ability to prevent spillage of lubricant from bottles on a site which would cause a potential health and safety risk. A further important benefit of the invention is that one person can manage the lubrication and installation of the cable by pushing the cable into a duct with one hand whilst holding the lubricant wipe at the conduit entry with the other hand. This eliminates the need for a second person.

It is to be appreciated that the embodiment of the invention described above with reference to the accompanying drawing has been given by way of example only and that modifications may be effected, whereby the scope of the invention is defined by the claims. Thus, for example, the lubricant may be selected from a wide variety of lubricants. Other ingredients may be added to the lubricant, for example an anti-rust ingredient.

## Claims

1. A pack of wipes comprising a container for the wipes, and a plurality of the wipes in the container, and **characterised by** the combination that the container is a flat bag, the wipes are impregnated with a lubricant, and the wipes are for wiping the lubricant on a cable which is to be drawn through a conduit.

2. A pack of wipes according to claim 1 in which the lubricant is a liquid lubricant or a gel lubricant.

3. A pack of wipes according to claim 1 or claim 2 in which the lubricant is a formulation comprising a base oil and one or more enhancing additives.

4. A pack of wipes according to claim 3 in which the formulation comprises at least 80% by volume of the base oil, and up to 20% by volume of the said one or more enhancing additives.

5. A pack of wipes according to any one of the preceding claims in which the container is a resealable container.

6. A pack of wipes according to claim 5 in which the resealable container comprises a peel-back adhesive cover which covers an opening in the container and through which the wipes are obtainable, and the peel-back adhesive cover being resealable on the container to reseal the container after the removal of a desired number of wipes through the opening.

7. A pack of wipes according to any one of the preceding claims in which the container is made of a plastics material and/or a laminate foil material.

8. A method of lubricating a cable which is to be drawn through a conduit, which method comprises providing a pack of wipes according to any one of the preceding claims, removing at least one of the wipes from the pack of wipes, and wiping the wipe on the cable in order to lubricate the cable with the lubricant that is on the wipe.

9. A method according to claim 8 in which the cable is a power cable, a data cable, or a telecommunications cable.

10. A method according to claim 8 or claim 9 in which the conduit is in a building or in a service conduit transporting one or more of the cables to a building or buildings.

11. A method according to any one of claims 8 - 10 comprising holding the wipe, and drawing the cable through the wipe while pulling or pushing the cable into the conduit so that the cable is lubricated as the cable enters the conduit.

## Patentansprüche

1. Packung von Wischtüchern, umfassend einen Behälter für die Wischtücher und eine Vielzahl der Wischtücher in dem Behälter, **gekennzeichnet durch** die Kombination, dass der Behälter ein flacher Beutel ist, die Wischtücher mit einem Schmiermittel imprägniert sind und die Wischtücher zum Wischen des Schmiermittels auf ein Kabel sind, das **durch** einen Kanal gezogen werden soll.

2. Packung von Wischtüchern gemäß Anspruch 1, wobei das Schmiermittel ein flüssiges Schmiermittel oder ein Gel-Schmiermittel ist.

3. Packung von Wischtüchern gemäß Anspruch 1 oder Anspruch 2, wobei das Schmiermittel eine Formulierung ist, die ein Basisöl und einen oder mehrere verstärkende Zusatzstoffe umfasst.

4. Packung von Wischtüchern gemäß Anspruch 3, wobei die Formulierung wenigstens 80 Vol.-% an dem Basisöl und bis zu 20 Vol.-% an dem einen oder den mehreren Zusatzstoffen umfasst.

5. Packung von Wischtüchern gemäß einem der vorstehenden Ansprüche, wobei der Behälter ein wiederverschließbarer Behälter ist.

6. Packung von Wischtüchern gemäß Anspruch 5, wobei der wiederverschließbare Behälter einen Abzieh-Haftverschluss umfasst, der eine Öffnung in dem Beutel bedeckt und durch welchen die Wischtücher erhältlich sind, und der Abzieh-Haftverschluss an dem Behälter wiederverschließbar ist, um den Behälter nach dem Entnehmen einer gewünschten Anzahl von Wischtüchern durch die Öffnung wieder zu verschließen.

7. Packung von Wischtüchern gemäß einem der vorstehenden Ansprüche, wobei der Behälter aus einem Kunststoffmaterial und/oder einem Laminatfolienmaterial hergestellt ist.

8. Verfahren zum Schmieren eines Kabels, das durch einen Kanal gezogen werden soll, welches Verfahren das Bereitstellen einer Packung von Wischtüchern gemäß einem der vorstehenden Ansprüche, Entnehmen von wenigstens einem der Wischtücher aus der Packung von Wischtüchern und Wischen des Wischtuchs auf das Kabel zum Schmieren des Kabels mit dem Schmiermittel, das sich auf dem Wischtuch befindet, umfasst.

9. Verfahren gemäß Anspruch 8, wobei das Kabel ein Stromkabel, ein Datenkabel oder ein Telekommunikationskabel ist.

10. Verfahren gemäß Anspruch 8 oder Anspruch 9, wobei sich der Kanal in einem Gebäude oder in einem Servicekanal, der eines oder mehrere der Kabel zu einem Gebäude oder zu Gebäuden befördert, befindet.

11. Verfahren gemäß einem der Ansprüche 8-10, umfassend Halten des Wischtuchs und Ziehen des Kabels durch das Wischtuch, während das Kabel in den Kanal gezogen oder gestoßen wird, so dass das Kabel geschmiert ist, wenn das Kabel in den Kanal eintritt.

## Revendications

1. Paquet de lingettes comprenant un récipient pour les lingettes, et une pluralité des lingettes dans le récipient, et **caractérisé par** la combinaison selon laquelle le récipient est un sac plat, les lingettes sont imprégnées avec un lubrifiant, et les lingettes servent à appliquer le lubrifiant sur un câble qui doit être tiré à travers un conduit.

2. Paquet de lingettes selon la revendication 1 dans lequel le lubrifiant est un lubrifiant liquide ou un lubrifiant en gel.

3. Paquet de lingettes selon la revendication 1 ou la revendication 2 dans lequel le lubrifiant est une formulation comprenant une huile de base et un ou plusieurs additifs d'amélioration.

4. Paquet de lingettes selon la revendication 3 dans lequel la formulation comprend au moins 80 % en volume de l'huile de base, et jusqu'à 20 % en volume dudit ou desdits additifs d'amélioration.

5. Paquet de lingettes selon l'une quelconque des revendications précédentes dans lequel le récipient est un récipient refermable hermétiquement.

6. Paquet de lingettes selon la revendication 5 dans lequel le récipient refermable hermétiquement comprend un rabat adhésif redécollable qui recouvre une ouverture dans le récipient par laquelle les lingettes peuvent être obtenues, et le rabat adhésif redécollable est refermable hermétiquement sur le récipient pour refermer hermétiquement le récipient après le retrait d'un nombre souhaité de lingettes par l'ouverture.

7. Paquet de lingettes selon l'une quelconque des revendications précédentes dans lequel le récipient est constitué d'un matériau plastique et/ou d'un matériau stratifié en feuille.

8. Procédé de lubrification d'un câble qui doit être tiré à travers un conduit, lequel procédé comprend l'obtention d'un paquet de lingettes selon l'une quelconque des revendications précédentes, le retrait d'au moins une des lingettes du paquet de lingettes, et le passage de la lingette sur le câble afin de lubrifier le câble avec le lubrifiant qui est sur la lingette.

9. Procédé selon la revendication 8 dans lequel le câble est un câble électrique, un câble de données, ou un câble de télécommunications.

10. Procédé selon la revendication 8 ou la revendication 9 dans lequel le conduit se trouve dans un bâtiment ou dans un conduit de service transportant un ou plusieurs des câbles jusqu'à un bâtiment ou des bâtiments.

11. Procédé selon l'une quelconque des revendications 8 à 10 comprenant le maintien de la lingette, et le tirage du câble à travers la lingette tout en tirant ou en poussant le câble dans le conduit de telle sorte que le câble est lubrifié lorsque le câble pénètre dans le conduit.
